# EUROPÄISCHE PATENTANMELDUNG

(11) **EP 3 089 439 A1**
(43) Veröffentlichungstag der Anmeldung: **02.11.2016**
(21) Anmeldenummer: 16167482.5
(22) Anmeldetag: 28.04.2016
(51) Int. Cl.: H04N 1/60

(54) **VERFAHREN UND SYSTEM ZUR FARBTREUEN AUSGABE EINES DIGITALBILDES**

(30) Priorität: 30.04.2015 DE 102015106770
(71) Anmelder: ColorGATE Digital Output Solutions GmbH, 30171 Hannover (DE)
(72) Erfinder: Kirschner, Thomas, 30559 Hannover (DE); Martorell Climent, Juan, 12540 Villarreal (ES)
(74) Vertreter: Aisch, Sebastian

(57) **Zusammenfassung**

Die Erfindung betrifft ein Verfahren und eine Vorrichtung zur farbtreuen Ausgabe eines vorgegebenen Digitalbildes auf einem spezifischen Ausgabegerät, wobei ein allgemeines Profiltarget bereitgestellt und ein designspezifisches Profiltarget aus den Farbwerten des Digitalbildes erzeugt wird. Beide Profiltargets werden dann auf einem spezifischen Ausgabesystem ausgegeben und dann mit Hilfe eines optischen Farbmessgeräts vermessen, um so ein designspezifisches Farbprofil zu erzeugen.

## Beschreibung

Die Erfindung betrifft ein Verfahren und ein System zur farbtreuen Ausgabe eines vorgegebenen Digitalbildes auf einem spezifischen Ausgabegerät, wobei das Digitalbild eine Mehrzahl von in einer Bilddatei abgespeicherten Bildpunkten hat, die jeweils einen Farbwert bezüglich eines für das Digitalbild definierten Farbsystems aufweisen.

Sowohl für die Erstellung als auch für die endgültige Verwendung von digitalen Bildinformationen ist es notwendig, diese digitalen Bildinformationen in Form eines Digitalbildes auf einem Ausgabegerät auszugeben. Für die Erstellung bzw. Bearbeitung des Digitalbildes an einem Computer wird ein entsprechendes Monitorbild auf einem Monitor angezeigt, das zumindest ausschnittsweise die Bildinformationen des Digitalbildes enthält. Soll das Digitalbild später auf Papier oder anderen Trägerobjekten, wie bspw. in Form von Dekoren oder Designs auf entsprechenden Formkörpern mit Hilfe entsprechender Druckverfahren aufgebracht werden, so muss das Digitalbild mit seinen entsprechenden Bildinformationen an das Ausgabegerät übertragen werden, von dem es dann auf Papier oder dem Formkörper aufgedruckt wird.

Im Sinne der vorliegenden Erfindung sind somit Ausgabegeräte all jene Vorrichtungen, die ein Digitalbild visuell wiedergeben, sei es in Form eines Monitors oder sei es in Form bekannter Druckverfahren. Hierbei seien Laser, Drucker und Tintenstrahldrucker aber auch im industriellen Umfeld die Siebdruckvorrichtungen, Offsetzdruckvorrichtungen sowie die Digitaldruckvorrichtungen als Ausgabegeräte im Sinne der vorliegenden Erfindung beispielhaft genannt.

Ein Digitalbild im Sinne der vorliegenden Erfindung besteht dabei unter anderem aus einer Mehrzahl von in einer Bilddatei abgespeicherten Bildpunkten, die jeweils einen Farbwert bezüglich eines für das Digitalbild definierten Farbsystems aufweisen. Durch eine entsprechende Repräsentation eines Farbwertes für jeden Bildpunkt (auch Pixel genannt) ergibt sich bei der Betrachtung ein entsprechendes Bild, das durch die menschliche Wahrnehmung aus den Einzelbildpunkten zusammengesetzt wird. Digitalbilder können dabei von einer externen Quelle stammen, bspw. einer Digitalkamera, aber auch frei an der Rechenmaschine selbst erstellt werden. Als Digitalbilder im Sinne der vorliegenden Erfindung werden auch CAD-Zeichnungen, digitale Dekore, digitale Designs sowie künstlerische Gestaltungen oder von externen Quellen stammende Digitalbilder beispielhaft verstanden.

Ein großes Problem bei der Ausgabe von Digitalbildern ist die Farbtreue der Wiedergabe bzw. Ausgabe des Digitalbildes auf dem jeweiligen spezifischen Ausgabegerät. In der Regel wird dem jeweiligen Digitalbild ein Farbsystem zugrunde gelegt, das die Codierung der Farbwerte der einzelnen Bildpunkte des Digitalbildes definiert. Beispielhaft seien hier Farbsysteme wie RGB, CMYK oder spezifische Farbsysteme wie sRGB oder ISOcoatedv2_CMYK genannt. Die einzelnen Farbsysteme spannen dabei einen Farbraum auf, der die in dem Digitalbild enthaltenen möglichen Farbwerte repräsentiert. Jeder Farbwert eines Bildpunktes der digitalen Bilddatei ist somit Bestandteil des Farbraumes des Farbsystems.

Ein Problem hierbei ist, dass jedes Ausgabegerät sein eigenes gerätespezifisches Farbsystem und somit einen geräteabhängigen Farbraum definiert, sodass der Farbraum des Ausgabegerätes und der Farbraum des Digitalbildes nicht zwingend deckungsgleich sein müssen. Hat das Digitalbild bspw. eine höhere Farbraumgröße bzw. Gamutgröße als das Ausgabegerät, so kann es hierbei zu Informationsverlusten bei der Ausgabe kommen. Zwar wird versucht, mit Hilfe einer Interpolation den nicht darstellbaren Farbwert am Ausgabegerät zu interpolieren. Dies geht jedoch auf Kosten der Farbtreue.

So werden bspw. in der Regel Digitalbilder im RGB Farbraum definiert, während klassische Digitaldrucker auf einem CMYK Farbraum basieren. Eine Transformation der Farbwerte vom RGB Farbraum in den CMYK Farbraum ist dabei zwingend erforderlich, was je nach Transformationsverfahren die Farbtreue negativ beeinflussen kann.

Ein weiteres Problem in Bezug auf die farbtreue Wiedergabe auf einem Ausgabegerät ist die Schwankung der Farbdarstellung der einzelnen Farbwerte des definierten Farbraums. So stellen bspw. zwei baugleiche identische Monitore einen speziellen Farbwert nicht 100% identisch dar, da zwischen beiden Monitoren naturbedingt Unterschiede existieren, die zu einer Farbabweichung führen. Gleiches gilt auch für beständige Ausgabegeräte, sodass auch hier ein und derselbe Farbwert nur bei eindeutig bestimmbarem Drucksystem (Druckverfahren, Farbwert, Farbe) eindeutig reproduzierbar ist.

Somit gibt jedes Ausgabegerät einen Farbwert eines definierten Farbraums in Nuancen unterschiedlich wieder, was gerade im industriellen Druckbereich und in der Serienproduktion nachteilig ist. Sollen bspw. Dekore auf Formkörpern gedruckt werden, so ist es wünschenswert, dass für eine Serienproduktion der bedruckten Formkörper jeder Formkörper bezüglich des aufgedruckten Dekors oder Designs identisch aussieht. Nur so lassen sich bspw. Fliesen oder Bodenpaneele ohne allzu große Streuung in Serie produzieren.

Hierfür ist es allerdings erforderlich, dass das Ausgabegerät bzw. das Gesamtsystem so kalibriert wird, dass auch bei einer Veränderung des zugrunde liegenden Drucksystems eine möglichst hohe Farbtreue erreicht wird. Hierfür werden bspw. Farbmanagementverfahren eingesetzt, die eine Transformation der Farbwerte der Bilddatei in den Farbraum des Ausgabegerätes unter Berücksichtigung von Darstellungsabweichungen transformieren.

Hierfür sind bspw. ICC-Profile bekannt, die als Farbprofile eine derartige Transformation zulassen. Zum Erzeugen eines solchen ICC-Profils wird dabei zunächst ein sogenanntes genormtes und standardisiertes Profiltarget auf dem Ausgabegerät ausgegeben, das in der Regel aus einer Mehrzahl von Farbfeldern besteht, die jeweils einen spezifischen und bekannten Farbwert repräsentieren. Nach Ausgabe dieses Profiltargets wird dieses dann mit Hilfe eines optischen Farbmessgeräts vermessen und die entsprechenden Farbwerte der einzelnen Farbfelder erfasst. Anhand der Abweichung eines Farbwertes eines bestimmten Farbfeldes von seinem spezifizierten Farbwert kann dann für diesen Farbwert eine entsprechende Korrektur in dem ICC-Profil hinterlegt werden, sodass beim Ausgeben der gewünschten Bilddatei unter Berücksichtigung des ICC-Profils dann tatsächlich der gewünschte Farbwert auf dem Ausgabegerät eingestellt wird. Hierdurch kann eine gute Farbtreue über das gesamte Bild erreicht werden.

Nachteilig hierbei ist jedoch insbesondere die Tatsache, dass das ICC-Profil eine auf den Ein- und Ausgabefarbraum bezogene Zuordnung abbildet, mit der zwar jede beliebige Bilddatei ausgegeben werden kann, jedoch für spezifische Designs nur suboptimale Transformationsergebnisse erreicht werden. Denn häufig müssen zwischen benachbarten Farbwerten in dem ICC-Profil interpoliert werden, wodurch letztlich nur eine Annäherung an die tatsächliche Korrektur möglich ist.

Es ist daher Aufgabe der vorliegenden Erfindung ein verbessertes Verfahren und ein verbessertes System zur Ausgabe von digitalen Bildern anzugeben, mit dem die farbtreue Ausgabe des Digitalbildes erhöht werden kann. Es ist insbesondere Aufgabe der vorliegenden Erfindung ein verbessertes Verfahren und ein verbessertes System anzugeben, mit dem die Farbtreue beim Bedrucken von Formkörpern und Objekten, insbesondere bei gedruckten Boden- oder Wandfliesen, Holzplatten, sowie verpressten Dekoroberflächen für Laminatböden, Möbeloberflächen, künstliche Furniere, HDF, MDF Platten, bedruckte Textilien und ähnliches zu verbessern.

Die Aufgabe mit dem Verfahren gemäß Anspruch 1 sowie mit dem System gemäß Anspruch 9 erfindungsgemäß gelöst.

Gemäß Anspruch 1 wird ein Verfahren zur farbtreuen Ausgabe eines vorgegebenen Digitalbildes auf einem spezifischen Ausgabegerät vorgeschlagen, wobei das Digitalbild eine Mehrzahl von in einer Bilddatei abgespeicherten Bildpunkten hat, die jeweils einen Farbwert bezüglich eines für das Digitalbild definierten Farbsystems aufweisen. Hierfür wird zunächst ein allgemeines Profiltarget bereitgestellt, das eine Mehrzahl von durch ein optisches Farbmessgerät erfassbaren Farbfeldern hat, die jeweils einen spezifizierten Farbwert repräsentieren, wobei das allgemeine Profiltarget zur Ausgabe auf einem spezifischen Ausgabegerät vorgesehen ist. Unter einem Profiltarget im Sinne der vorliegenden Erfindung werden dabei Messgerät-erfassbare Darstellungen von verschiedenen Farbwerten verstanden, wenn sie auf einem Ausgabegerät ausgegeben werden. Das Bereitstellen des allgemeinen Profiltargets geschieht dabei in digitaler Form, bspw. in Form einer digitalen Bilddatei und ist vorzugsweise in einem digitalen Datenspeicher hinterlegt.

Die Farbwerte eines Profiltargets werden dabei meist durch genormte Farbfelder dargestellt, wobei das gesamte Farbfeld durch einen einzigen Farbwert repräsentiert wird. Dabei ist jedem Farbfeld ein bestimmter Farbwert zugeordnet, sodass ein solches Farbfeld auf dem Profiltarget eindeutig auffindbar ist. Durch das optische Erfassen eines solchen ausgegebenen allgemeinen Profiltargets lässt sich dann für jedes Farbfeld der ausgegebene Farbwert und der diesem Farbwert zugeordnete Farbwert ermitteln und miteinander vergleichen, sodass eine entsprechende Abweichung bei der Ausgabe des jeweiligen Farbwertes festgestellt werden kann.

Ein solches allgemeines Profiltarget weist dabei in der Regel über die gesamte Anzahl der Farbfelder hinweg eine möglichst gleichmäßige Auswahl von Farbwerten aus dem möglichen Farbraum auf.

Erfindungsgemäß ist nun vorgesehen, dass aus den Farbwerten der abgespeicherten Bildpunkte des vorgegebenen Digitalbildes designspezifische Farbwerte ermittelt werden, die für das Digitalbild mehr oder weniger charakteristisch sind. Das Ermitteln der designspezifischen Farbwerte erfolgt dabei in Abhängigkeit von der Häufigkeit der einzelnen Farbwerte in dem Digitalbild mittels einer Recheneinheit und somit automatisiert. Die Häufigkeit kann dabei auch eins sein, wodurch schließlich alle Farbwerte, die in dem Digitalbild vorhanden sind und dem jeweiligen Bildpunkt zugeordnet sind, als designspezifische Farbwerte ermittelt werden. Ist die Anzahl der Gesamtfarbwerte des Digitalbildes allerdings zu hoch, so werden die Farbwerte als designspezifische Farbwerte ermittelt, die am Häufigsten in dem Digitalbild auftauchen, bis die maximal mögliche Anzahl von Farbwerten für das designspezifische Profiltarget erreicht ist.

Aus diesen designspezifischen Farbwerten wird nun ein designspezifisches Profiltarget mittels der Recheneinheit und somit automatisiert erzeugt, wobei das designspezifische Profiltarget, genau wie das bereitgestellte allgemeine Profiltarget, in digitaler Form vorliegt und in einem Datenspeicher hinterlegt wird. Das mittels der Recheneinheit automatisiert erzeugte designspezifische Profiltarget weist durch ein optisches Farbmessgerät erfassbare Farbfelder auf, wobei zumindest ein Teil der durch ein optisches Farbmessgerät erfassbaren Farbfelder jeweils eine der ermittelten designspezifischen Farbwerte aufweist. Damit wird ein designspezifisches Profiltarget erzeugt, dessen Farbfelder die designspezifischen Farbwerte aufweisen, die sich letztlich auch in dem vorgegebenen Digitalbild wiederfinden.

Vorteilhafterweise weisen dabei alle Farbfelder des designspezifischen Profiltargets jeweils einen der ermittelten designspezifischen Farbwerte auf.

Anschließend werden das bereitgestellte allgemeine Profiltarget und das erzeugte designspezifische Profiltarget auf dem spezifischen Ausgabegerät ausgegeben, indem bspw. die beiden Profiltargets in Form einer Bilddatei an das Ausgabegerät gesendet werden. Die so ausgegebenen Profiltargets werden nun mit Hilfe eines optischen Farbmessgeräts vermessen und die einzelnen Farbwerte der Farbfelder der ausgegebenen Profiltargets so erfasst und entsprechend in einem digitalen Datenspeicher abgespeichert.

Im nächsten Schritt wird dann ein designspezifisches Farbprofil in Abhängigkeit von den Farbwerten der Farbfelder der digitalen Profiltargets und den jeweils hierzu korrespondierenden erfassten Farbwerten der ausgegebenen Profiltargets erzeugt und das so erzeugte designspezifische Farbprofil in einem digitalen Datenspeicher abgespeichert. Ein derartiges Farbprofil kann bspw. ein ICC-Farbprofil sein.

Abschließend wird nun das vorgegebene Digitalbild unter Berücksichtigung des designspezifischen Farbprofils auf dem spezifischen Ausgabegerät ausgegeben, wobei unter Berücksichtigung des designspezifischen Farbprofils die einzelnen Farbwerte des Digitalbildes unter Umständen korrigiert bzw. verändert werden, sodass das ausgegebene Digitalbild eine möglichst hohe Farbtreue in Bezug auf das originale Digitalbild aufweist.

Mit der vorliegenden Erfindung wird es somit möglich, ein designspezifisches Farbprofil zur farbtreuen Ausgabe von Digitalbildern auf Ausgabegeräten zu erzeugen, wodurch die Farbtreue bei der Ausgabe deutlich verbessert werden kann. Denn dem Farbprofil liegen nunmehr Informationen der designspezifischen Farbwerte des auszugebenden Digitalbildes zugrunde, wodurch große Interpolationsgradienten vermieden werden und so eine deutlich verbesserte Farbtreue erreicht werden kann.

Dabei hat die Erfinderschaft insbesondere erkannt, dass es ausreichend ist, wenn die am häufigsten vorkommenden Farbwerte der Erzeugung des designspezifischen Farbprofils zugrunde gelegt werden, um eine möglichst hohe und insbesondere für die Serienproduktion von bedruckten Formkörpern ausreichende Farbtreue zu erreichen.

Vorteilhafterweise ist das allgemeine Profiltarget ein IT8-Target mit entsprechend genormten Farbfeldern. Denkbar ist auch, dass das designspezifische Profiltarget der Spezifikation eines IT8-Targets entspricht. Darüber hinaus ist es auch denkbar, dass das allgemeine Profiltarget und/oder das designspezifische Profiltarget einem vorgebbaren bzw. frei wählbaren Targetlayout entsprechen. Das optische Farbmessgerät ist dabei so eingerichtet, dass es in Abhängigkeit von dem vorgegebenen bzw. gewählten Targetlayout die entsprechenden einzelnen Farbfelder identifiziert und die einzelnen Farbwerte zu den Farbfeldern erfassen und die erfassten Farbwerte der einzelnen Farbfelder abspeichern kann. Ein solches Targetlayout kann auch dergestalt sein, dass die Profiltargets, die mittels des spezifischen Ausgebegerätes ausgegeben werden sollen, zwei oder mehr Seiten bzw. wiederholende Ausgaben umfassen.

Wie bereits erwähnt, ist es besonders vorteilhaft, wenn das Farbprofil ein ICC-Profil ist, das häufig Grundlage von Farbmanagementverfahren ist. In einer vorteilhaften Ausgestaltung hierzu wird ein ICC-Profil als designspezifisch Farbprofil erzeugt, das die direkte Transformation der Farbwerte von dem für das Digitalbild definierten Farbsystem und das für das Ausgabegerät definierten Farbsystem definiert. Dies hat den Vorteil, dass es keiner Umwandlung bzw. Transformation in ein Verbindungsfarbsystem bedarf. Ein solch speziellen ICC-Profil wird auch Device-Link-Profil oder Direkt-Link-Profil genannt.

In einer weiteren vorteilhaften Ausführungsform wird ein Histogramm der Farbwerte der Bildpunkte des vorgegebenen Digitalbildes mit Hilfe der Recheneinheit erzeugt, wobei das Histogramm eine Häufigkeitsverteilung der einzelnen Farbwerte der Bildpunkte des vorgegebenen Digitalbildes für jeden einzelnen Farbwert repräsentiert. In dem Histogramm wird somit für alle verschiedenen Farbwerte des Digitalbildes die jeweilige Häufigkeit in dem Digitalbild hinterlegt, wobei die designspezifischen Farbwerte dann in Abhängigkeit von der Häufigkeitsverteilung in dem Histogramm ermittelt werden.

Hierbei ist denkbar, dass die am häufigst vorkommenden Farbwerte aus dem Histogramm ermittelt und als designspezifische Farbwerte dem erfindungsgemäßen Verfahren zugrunde gelegt werden. Das Ermitteln der am häufigst vorkommenden Farbwerte kann bspw. mittels eines Schwellenwertes erfolgen, sodass bspw. all jene Farbwerte als designspezifische Farbwerte ausgewählt werden, deren Häufigkeit oberhalb des Schwellenwertes liegt.

Denkbar ist es allerdings auch, dass eine maximale Gesamtfarbwertanzahl berücksichtigt wird, sodass die am häufigst vorkommenden Farbwerte diese maximale Gesamtfarbwertanzahl nicht überschreiten. Dies ist insbesondere dann vorteilhaft, wenn die Anzahl der verschiedenen Farbwerte in dem Digitalbild die Anzahl der Farbfelder für das designspezifische Profiltarget überschreiten. Dann werden die am häufigst auftretenden Farbwerte aus dem Histogramm ermittelt, bis die maximale Gesamtfarbwertanzahl erreicht wurde, die bspw. der Anzahl der maximalen Farbfelder des Profiltargets entspricht.

In einer weiteren vorteilhaften Ausführungsform wird zuvor das vorgegebene Digitalbild hinsichtlich seiner Datenmenge komprimiert oder hinsichtlich der Auflösung reduziert, wodurch gerade bei Reduzierung der Auflösung die Anzahl der verschiedenen Farbwerte in dem Digitalbild verringert wird. Das in seiner Datenmenge bzw. seiner Auflösung reduzierte Digitalbild wird dann dem erfindungsgemäßen Verfahren zugrunde gelegt.

Die Farbwerte der ausgegebenen Profiltargets können bspw. mittels eines Farbsensors, eine Colorimeters, eines Spektralphotometers, einer Digitalkamera und/oder eines Spektraldensitometers als optisches Farbmessgerät erfasst werden.

Die Erfindung wird anhand der beigefügten Figur beispielhaft näher erläutert. Es zeigt:

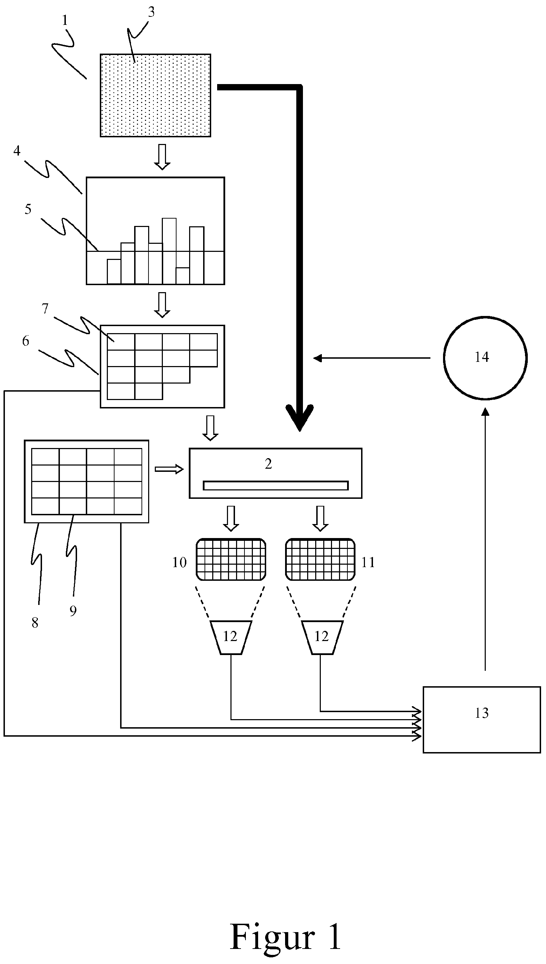

- Figur 1: schematische Darstellung des Verfahrensablaufs des erfindungsgemäßen Verfahrens.

Figur 1 zeigt schematisch den Ablauf des erfindungsgemäßen Verfahrens zur farbtreuen Ausgabe eines Digitalbildes 1 auf einem spezifischen Ausgabegerät 2, im Falle der Figur 1 ein digitales Drucksystem. Das Digitalbild 1 ist dabei auf einem digitalen Datenspeicher (nicht dargestellt) abgespeichert und kann bspw. in Form einer digitalen Bilddatei vorliegen.

Das Digitalbild 1, das bspw. ein Design oder ein Dekor für einen bedruckbaren Formkörper sein kann, besteht bekanntermaßen aus einer Mehrzahl von Bildpunkten 3, denen jeweils ein bestimmter Farbwert bezüglich eines für das Digitalbild definierten Farbsystems zugeordnet ist. In der Summe aller farbigen Bildpunkte 3 wird so das gesamte darzustellende Bild erzeugt.

Das Digitalbild 1 wird nun in eine Recheneinheit (nicht dargestellt) eingelesen, um es dort den ersten Analyseprozessen zu unterziehen. Im ersten Schritt wird dabei jeder einzelne Bildpunkt 3 des Digitalbildes 1 hinsichtlich seines Farbwertes untersucht und ein Histogramm 4 erzeugt, das die Häufigkeitsverteilung der einzelnen Farbwerte repräsentiert. Aus diesem Histogramm 4 lässt sich demnach ableiten, wie oft ein bestimmter Farbwert innerhalb des Farbsystems in dem gesamten Digitalbild 1 vorkommt, sodass somit insbesondere die relevanten designspezifischen Farbwerte ausgewählt werden können.

Dies kann bspw. dadurch geschehen, dass diejenigen Farbwerte als designspezifische Farbwerte ausgewählt werden, die oberhalb einer Mindesthäufung (Schwellenwert 5) liegen. Denkbar ist aber auch, dass eine vorgegebene Anzahl von designspezifischen Farbwerten ausgewählt wird, und zwar in Abhängigkeit einer vorgegebenen Gesamtfarbwertanzahl, wobei dann die am häufigst vorkommenden Farbwerte bis zu der Gesamtfarbwertanzahl als designspezifische Farbwerte ausgewählt werden.

Aus den so ausgewählten designspezifischen Farbwerten wird nun ein designspezifisches Profiltarget 6 erzeugt, das eine Mehrzahl von Farbfeldern 7 aufweist, die jeweils genau einen der ausgewählten designspezifischen Farbwerte enthalten. Dieses so erzeugte designspezifische Profiltarget 6 ist dabei mit Hilfe eines Farbmessgeräts scannbar bzw. elektronisch erfassbar, sodass die jeweils einzelnen Farbwerte der Farbfelder 7 elektronisch erfassbar sind, wenn das designspezifische Profiltarget 6 auf dem Drucksystem 2 ausgegeben wird.

Des Weiteren wird der Recheneinheit ein allgemeines Profiltarget 8 bereitgestellt, bspw. in Form einer Bilddatei, wobei das allgemeine Profiltarget 8 ebenfalls eine Mehrzahl von genormten Farbfeldern 9 aufweist, denen jeweils ein Farbwert zugeordnet ist. Diese Farbfelder 9 weisen dabei Farbwerte auf, die aus der gesamten möglichen Palette des Farbraums ausgewählt sind, sodass das allgemeine Profiltarget 8 demnach auch Farbfelder 9 mit Farbwerten aufweisen kann, die nicht in dem Digitalbild 1 vorkommen. Vielmehr wird mit dem allgemeinen Profiltarget 8 angestrebt, eine möglichst gleichmäßige Auswahl einzelner Farbwerte des gesamten Farbraums zu erzeugen, um so die gesamte Bandbreite des Farbraums beispielhaft abzubilden.

Sowohl das designspezifische Profiltarget 6 als auch das allgemeine Profiltarget 8 werden nun auf dem Drucksystem 2 ausgegeben, sodass im Ausführungsbeispiel der Figur 1 ein designspezifisches ausgegebenen Profiltarget 10 und ein allgemeines ausgegebenen Profiltarget 11 durch das Drucksystem 2 verkörpert wird. Die Ausgabe der Profiltargets 6 und 8 erfolgt dabei unter den gleichen Bedingungen, wie später das Digitalbild 1 ausgegeben werden soll. Soll bspw. das Digitalbild 1 auf einen Formkörper, bspw. einen formfesten Formkörper, aufgedruckt werden (bspw. Dekore), so werden die Profiltargets 6 und 8 ebenfalls auf dem entsprechenden Formkörper aufgedruckt, um so hinsichtlich des Druckträgers gleiche Randbedingungen zu schaffen.

Das den Profiltargets zugrundeliegende Targetlayout kann bspw. so ausgebildet sein, dass mehrere entsprechende Formkörper für ein Profiltarget bedruckt werden müssen, wobei jeder bedruckte Formkörper eines Profiltargets jeweils verschiedene Farbwerte enthält. Hierdurch kann die Anzahl der zu berücksichtigenden Farbwerte erhöht werden.

Je nach Größe des Druckträgers ist es auch denkbar, dass das designspezifische Profiltarget 6 und das allgemeine Profiltarget 8 auf ein und demselben Druckträger (Formkörper) aufgedruckt wird, wodurch lediglich nur ein Ausdruck notwendig ist.

Im nächsten Schritt werden die ausgegebenen Profiltargets 10 und 11 mit Hilfe eines optischen Messgeräts 12 vermessen, um so die aufgedruckten Farbwerte der einzelnen Farbfelder zu erfassen. Die mit Hilfe des optischen Farbmessgeräts erfassten Farbwerte der einzelnen Farbfelder der Profiltargets 10 und 11 werden dann einer Profilierungseinheit 13 übergeben, um ein Farbprofil zur Farbwertkorrektur zu erzeugen. Der Profilierungseinheit 13, die bspw. eine bekannte Profilierungssoftware enthalten kann, erhält darüber hinaus auch Informationen bezüglich des designspezifischen Profiltargets 6 sowie des allgemeinen Profiltargets 8, sodass die dem jeweiligen Farbfeld zugeordneten Farbwerte und die tatsächlich ausgegebenen und erfassten Farbwerte des jeweiligen Farbfeldes miteinander verglichen werden können, um so Abweichungen bei der Ausgabe der jeweiligen Farbwerte feststellen zu können.

Basierend auf diesem Vergleich wird nun von der Profilierungseinheit 13 ein Farbprofil 14 erzeugt, das in Bezug auf das konkrete Digitalbild 1 eine spezifische Farbwertkorrektur bei der Ausgabe des Digitalbildes 1 auf dem spezifischen Drucksystem 2 erlaubt.

Wird nun das Digitalbild 1 unter Berücksichtigung des designspezifischen Farbprofils 14, bspw. ein ICC-Profil, auf dem Drucksystem 2 ausgegeben, so werden die einzelnen Farbwerte des Digitalbildes 1 je nach Charakterisierung in dem designspezifischen Farbprofil 14 vor der Ausgabe auf dem Drucksystem 2 korrigiert, sodass das ausgegebene Digitalbild 1 eine sehr hohe Farbtreue erreicht.

## Patentansprüche

1. Verfahren zur farbtreuen Ausgabe eines vorgegebenen Digitalbildes (1) auf einem spezifischen Ausgabegerät (2), wobei das Digitalbild (1) eine Mehrzahl von in einer Bilddatei abgespeicherten Bildpunkten (3) hat, die jeweils einen Farbwert bezüglich eines für das Digitalbild (1) definierten Farbsystems aufweisen, mit den Schritten:
a) Bereitstellen eines allgemeinen Profiltargets (8), das eine Mehrzahl von durch ein optisches Farbmessgerät erfassbaren Farbfeldern (9) hat, die jeweils einen spezifizierten Farbwert repräsentieren, zur Ausgabe auf einem spezifischen Ausgabegerät (2),
b) Ermitteln von designspezifischen Farbwerten aus den Farbwerten der abgespeicherten Bildpunkte (3) des vorgegebenen Digitalbildes (1) in Abhängigkeit von der Häufigkeit der einzelnen Farbwerte in dem Digitalbild (1), mittels einer Recheneinheit,
c) Erzeugen eines designspezifischen Profiltargets (6) mittels der Recheneinheit, wobei zumindest ein Teil der durch ein optisches Farbmessgerät (12) erfassbaren Farbfelder (9) jeweils einen der ermittelten designspezifischen Farbwerte aufweist, und Abspeichern des erzeugten designspezifischen Profiltargets (6) in einem digitalen Datenspeicher,
d) Ausgeben des bereitgestellten allgemeinen Profiltargets (8) und des erzeugten designspezifischen Profiltargets (6) auf dem spezifischen Ausgabegerät (2),
e) Erfassen der einzelnen Farbwerte der Farbfelder (7) der ausgegebenen Profiltargets (10, 11) mittels eines optischen Farbmessgerätes (12) und Abspeichern der erfassten Farbwerte in einem digitalen Datenspeicher,
f) Erzeugen eines designspezifischen Farbprofils (14) in Abhängigkeit von den Farbwerten der Farbfelder (7) der Profiltargets (6, 8) und den jeweils hierzu korrespondierenden erfassten Farbwerten und Abspeichern des designspezifischen Farbprofils (14) in einem digitalen Datenspeicher, und
g) Ausgeben des vorgegebenen Digitalbildes (1) auf dem spezifischen Ausgabegerät (2) unter Berücksichtigung des designspezifischen Farbprofils (14).

2. Verfahren nach Anspruch 1, **dadurch gekennzeichnet, dass** das allgemeine Profiltarget (8) als ein IT8-Target bereitgestellt wird oder dass das allgemeine Profiltarget (8) und/oder das designspezifische Profiltarget (6) einem vorgebbaren Targetlayout entspricht.

3. Verfahren nach Anspruch 1 oder 2, **dadurch gekennzeichnet, dass** als designspezifisches Farbprofil (14) ein designspezifisches ICC-Profil erzeugt wird.

4. Verfahren nach Anspruch 3, **dadurch gekennzeichnet, dass** ein ICC-Profil erzeugt wird, das die direkte Transformation der Farbwerte von dem für das Digitalbild (1) definierten Farbsystem in das für das Ausgabegerät (2) definierten Farbsystem definiert.

5. Verfahren nach einem der vorhergehenden Ansprüche, **dadurch gekennzeichnet, dass** ein Histogramm (4) der Farbwerte der Bildpunkte (3) des vorgegebenen Digitalbildes (1) erzeugt wird, das eine Häufigkeitsverteilung der einzelnen Farbwerte der Bildpunkte (3) des vorgegebenen Digitalbildes (1) repräsentiert, wobei die designspezifischen Farbwerte in Abhängigkeit von der Häufigkeitsverteilung in dem Histogramm (4) ermittelt werden.

6. Verfahren nach Anspruch 5, **dadurch gekennzeichnet, dass** die designspezifischen Farbwerte in Abhängigkeit von einer vorgegebenen Gesamtfarbwertanzahl aus der Häufigkeitsverteilung des Histogramms (4) ermittelt werden.

7. Verfahren nach einem der vorhergehenden Ansprüche, **dadurch gekennzeichnet, dass** zuvor das vorgegebene Digitalbild (1) hinsichtlich seiner Datenmenge komprimiert oder hinsichtlich der Auflösung reduziert wird.

8. Verfahren nach einem der vorhergehenden Ansprüche, **dadurch gekennzeichnet, dass** das vorgegebene Digitalbild (1) hinsichtlich der Auflösung mittels einer bicubischen Skalierung reduziert wird.

9. Verfahren nach einem der vorhergehenden Ansprüche, **dadurch gekennzeichnet, dass** die Farbwerte mittels eines Farbsensors, eines Colorimeters, eines Spektralphotometer, einer Digitalkamera und/oder eines Spektraldensitometers als optisches Farbmessgerät (12) erfasst werden.

10. System zur farbtreuen Ausgabe eines vorgegebenen Digitalbildes (1) auf einem spezifischen Ausgabegerät (2), wobei das Digitalbild (1) eine Mehrzahl von in einer Bilddatei abgespeicherten Bildpunkten (3) hat, die jeweils einen Farbwert bezüglich eines für das Digitalbild (1) definierten Farbsystems aufweisen, mit einem digitalen Datenspeicher, einer Recheneinheit, einem optischen Farbmessgerät (12) und einem spezifischen Ausgabegerät (2), eingerichtet zur Durchführung des Verfahrens nach einem der vorhergehenden Ansprüche.
